Europäisches Patentamt

European Patent Office

Office européen des brevets

(19)

(11) Veröffentlichungsnummer: **0 002 225**
**B1**

(12) **EUROPÄISCHE PATENTSCHRIFT**

(45) Veröffentlichungstag der Patentschrift: **29.04.81**

(21) Anmeldenummer: **78101413.9**

(22) Anmeldetag: **20.11.78**

(51) Int. Cl.³: **H 01 H 83/14, H 01 F 40/12**

(54) **Fehlerstromschutzschalter, der auf Wechselstromfehlerströme, Gleichstromanteile sowie auf glatte Gleichstromfehlerströme anspricht.**

(30) Priorität: **28.11.77 LU 78600**

(43) Veröffentlichungstag der Anmeldung:
**13.06.79 Patentblatt 79/12**

(45) Bekanntmachung des Hinweises auf die Patenterteilung:
**29.04.81 Patentblatt 81/17**

(84) Benannte Vertragsstaaten:
**BE CH DE FR GB NL SE**

(56) Entgegenhaltungen:
**DE - A - 2 201 781**
**FR - A - 2 025 082**
**FR - A - 2 106 374**
**FR - A - 2 321 208**
**US - A - 3 579 280**

(73) Patentinhaber: **Gath, Nicolas**
**15, rue Joseph Tockert**
**L-Luxembourg Hollerich (LU)**

(72) Erfinder: **Gath, Nicolas**
**15, rue Joseph Tockert**
**L-Luxembourg Hollerich (LU)**

(74) Vertreter: **Mehl, Ernst, Dipl.-Ing.**
**Wittelsbacherplatz 2**
**D-8000 München 2 (DE)**

Courier Press, Leamington Spa, England.

# Fehlerstromschutzschalter, der auf Wechselstromfehlerströme Gleichstromanteile sowie auf glatte Gleichstromfehlerströme anspricht

Die Erfindung bezeiht sich auf einen Fehlerstromschutzschalter, der Wechselstromfehlerströme, Gleichstromanteile sowie glatte Gleichstromfehlerströme erfassen kann und der nach dem Prinzip des Summenstromwandlers arbeitet, durch dessen Ringkern die betriebsstromführenden Leiter durchgeführt sind. Solche Fehlerstromschutzschalter sind als Kombinationsgeräte spezieller Fehlerstromschutzschalter bekannt.

Viele der neuerdings vorgeschlagenen Fehlerstromschutzschalter haben als Einzelgerät den Nachteil, daß ihre Empfindlichkeit gegen Wechselstromfehlerstrom und jene gegen Komponenten eines Gleichstromfehlerstroms in einem ungünstigen Verhältnis zueinanderstehen und daß sie daher unbefriedigend unterschiedlich ansprechen. Bei den weitaus meisten Fehlerstromschutzschaltern ist kein Schutz gegeben, wenn infolge eines Isolationsfehlers in einem Verbrauchergerät ein halbwellenfreier Gleichstromfehlerstrom auftritt. Da der Fehlerstrom dann ein Gleichstrom ist, bewirkt er zwar im Ringkern des Summenstromwandlers eine gleichbleibende Magnetisierung aber keinen Strom in der Sekundärspule.

Viele Fehlerstromschutzschalter weisen den Nachteil auf, daß der Kern des Summenstromwandlers nach einem starken Fehlerstrom, der zu einer Abschaltung geführt hat, eine Remanenzmagnetisierung aufweist, die nicht so leicht wieder abgebaut wird. Dadurch verändert sich die Empfindlichkeit für später eintretende Fehlerströme. Diesen Nachteil will man mit einer Schaltung mit zwei Ringkernen nach DE—A 21 24 179 vermeiden. Diese benötigt jedoch zwei Wandlerkerne und fertigungsbedingte Toleranzen in den magnetischen Eigenschaften der Wandlerkerne müssen mit hoher Präzision über einen Abgleichwiderstand ausgeglichen werden, wenn keine Fehlabschaltungen eintreten sollen.

Der Erfindung liegt die Aufgabe zugrunde, einen Fehlerstromschutzschalter zu entwickeln, der zwar für Wachselfehlerströme sowie glatte Gleichstromfehlerströme etwa gleiche Empfindlichkeit aufweist, und nach einem Auslösevorgang in seinem Ansprechverhalten nicht durch Remanenz beeinträchtigt ist, jedoch mit einem einzigen Ringkern auskommt.

Die Lösung dieser Aufgabe erfolgt dadurch, daß zumindest ein weiterer Leiter im Inneren des Ringkerns selbst mindestens längs eines Ringbereiches etwa in der Mittellinie angeordnet ist und mit einem Impulsgenerator für höhere Frequenzen als der Netzfrequenz verbunden ist, dessen Impulse so bemessen sind, daß der Kern in die magnetische Sättigung gelangt.

Ein solcher Fehlerstromschutzschalter erfüllt die Wirkungen eines Kombinationsgerätes durch ein Einzelgerät. Er kann mit einem elektromechanischen Auslöser bewährter Bauweise oder mit einem elektronischen Auslöser arbeiten. Wesentlich ist, daß der im Ringkern selbst angeordnete Leiter entsprechend den Impulsen des Impulsgenerators jeweils ein zirkulares Feld aufbaut, das in Ebenen senkrecht zur Mittellinie verläuft und so lange ein in der Ebene des Ringkerns geschlossenes Magnetfeld abbaut. Dadurch wird einerseits remanenter Magnetismus beseitigt und andererseits auch ein von einem Gleichstromfehlerstrom herrührendes Magnetfeld so unterbrochen, daß sein Abbau und der nachfolgende Wiederaufbau in einer Sekundärwicklung ein Signal induzieren kann.

Außerhalb des Gebietes von Fehlerstromschutzschaltern ist eine magnetische Anordnung bekannt (DE—A 22 01 781), die aus einem spiralförmig zusammengerollten Kern aus einem Band aus magnetisch und elektrisch leitendem Material besteht, an das eine Wechselspannungsquelle angeschlossen ist. Würde man eine solche magnetische Anordnung für Fehlerstromschutzschalter heranziehen wollen, so käme der Nachteil zum Tragen, daß der im Kern aufgebaute Magnetfluß durch den von der Quelle abgegebenen Wechselstrom unzureichend gelöscht wird. Der Abstand des Nutzsignals von den Störimpulsen wäre daher nicht zufriedenstellend groß und es könnten keine Spannungsimpulse mit steilen Flanken verwandt werden. Im magnetisch und elektrisch leitenden Material des Ringkerns der bekannten magnetischen Anordnung wird nämlich der Strom infolge von Wirbelströmen an den Rand gedrängt. Die signallöschende Wirkung des in Ringrichtung verlaufenden Stromes ist daher jeweils im Innerbereich des Bandes gering. Eine solche Anordnung zeigt darüber hinaus eine Reihe weiterer Nachteile, die vor einem Einsatz bei Fehlerstromschutzschaltern zu beheben wären.

Beim Fehlerstromschutzschalter nach der Erfindung verläuft der im Ringkern selbst angeordnete Leiter zu diesem auf einer gewissen Wegstrecke konzentrisch zu den Kraftlinien des magnetischen Flusses, die ein Fehlerstrom erzeugen kann. Die Funktionen magnetisches Leiten und elektrisches Leiten werden hierbei getrennt. Es ist günstig, wenn der Leiter einigermaßen in der Mitte des Querschnitts des Ringkerns angeordnet ist.

Wenn der Ringkern aus Ferrit ausgebildet ist, vermeidet man Wirbelströme und dadurch bedingte Verluste.

Der Ringkern kann als hohler Torus mit zumindest einer Durchführungsöffnung ausgebildet sein.

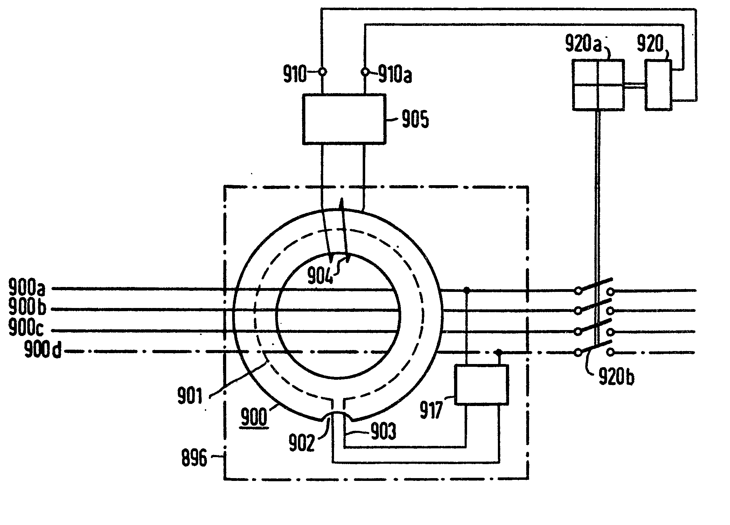

Die Erfindung soll anhand eines in der Zeichnung grob schematisch wiedergegebenen Ausführungsbeispiels näher erläutert werden:

Den Ringkern 900 in der Fehlerstromprüfschaltung 896 kann man sich geometrisch anschaulich folgendermaßen hergestellt vorstellen: Ein Rohr von 60 mm Länge, von 6 mm Außendurchmesser und mit einer lichten Weite von 2 mm wird so gebogen, daß sich die beiden Enden berühren und ein hohler Torus entsteht. Dieser hat einen äußeren Durchmesser von etwa 22 mm und umschließt ein Loch von etwa 16 mm Durchmesser. Die beiden sich berührenden Enden können zusammengeschweißt werden. Am äußeren Umfang des Ringkerns wird durch die Rohrwand ein Loch von 2 mm Durchmesser bis ins Rohrinnere eingebohrt. Durch diese Durchführungsöffnung 902 läßt sich ein Kupferdraht 903 von etwa 0,5 mm Durchmesser schräg einschieben, so daß er an der Innenseite der Rohrwandung entlanggeführt ist. Nach Einschieben einer Drahtlänge von 60 mm erscheint der Drahtanfang am eingebohrten Loch. Er kann aus der Durchführungsöffnung herausgeführt werden. Durch diesen Draht 903, der in etwa längs der Mittellinie 901 des Ringkerns verläuft, können bis in die magnetische Sättigung führende Impulse eines Impulsgenerators 917 gelietet werden.

Durch das vom Ringkern 900 gebildete Loch von 16 mm Durchmesser können in üblicher Weise die Leiter für die Phasen 900a, 900b und 900c sowie für den Nulleiter 900d durchgefürt werden. Sie versorgen eine Verbraucheranlage mit Energie. Im Ringkern 900 ist der in etwa längs seiner Mittellinie 901 geführte Kupferdraht 903 von beispielsweise 0,5 Durchmesser auf der ganzen Länge des Rohres bzw. Ringkerns, differentiell betrachtet, parallel zu den benachbarten in dem permeablen Material des Kerns verlaufenden magnetischen Kraftlinien, die von einem Fehlerstrom erzeugt werden. Vorteilhafterweise ist die Rohrwandung überall einigermaßen gleich dick. Als magnetisches Material ist Ferrit besonders günstig, um Wirbelstromverluste zu vermeiden.

Durch einen längs der Mittellinie 901 im Kupferleiter 903 verlaufenden elektrischen Impuls, der den Ringkern bis in die magnetische Sättigung führt, wird das magnetische Material über einen ganzen Ringquerschnitt in die magnetische Sättigung geführt.

Sobald der in die Sättigung führende Strom eines Impulses aufgehört hat zu fließen, ist im Falle eines Fehlerstroms nur noch das dadurch im Summenstromwandler induzierte Feld wirksam. Dieses bewirkt eine entsprechende Längsmagnetisierung längs der Mittellinie 901. Der nächste starke Stromstoß eines Impulses vom Impulsgenerator 917 treibt den Kern in die zirkular-transverasale magnetische Sättigung, so daß die Längsmagnetisierung unterbunden wird. Diese jeweilige Änderung des Längsmagnetflusses bewirkt eine Spannung in einer Sekundärspule 904, die in üblicher Weise auf dem Ringkern aufgebracht ist. Die Sekundärwicklung 904 kann mehrmals um den Körper des Ringkerns 900, also durch das von ihm gebildete Loch als Spule in mehreren Windungen durchgeführt sein. Je stärker der Fehlerstrom, um so stärker wird die dadurch induzierte Spannung.

Die in der Sekundärspule 904 induzierte Spannung, oder allgemein ausgedrückt das darin entstandene Signal, kann allgemein gesprochen einer Auswerteschaltung 905 zugeführt werden. Diese kann in bewährter Wiese elektromagnetisch arbeiten oder also elektronische Schaltung ausgeführt sein. Die Auswerteschaltung 905 bewirkt, falls der Fehlerstrom einen zulässigen Höchstwert überschreitet, die Abschaltung an den Kontakten 920b durch ein von einem Auslöser 920 ausgelöstes Schaltschloß 920a. Die Auswertschaltung 905 kann nach entsprechender Umformung des von der Sekundärspule 904 herrührenden Signals also auf einen Auslöser 920 einwirken.

Der Draht 903, der längs der Mittellinie 901 im Inneren des Wandlerkerns angeordnet ist, soll günstigerweise von einem Strom durchflossen werden, der während einer kurzen Zeit, beispielsweise während 0,3 msec im Kern eine bis weit in die Sättigung gehende Quermagnetisierung—quer zu dem von einem Fehlerstrom herrührenden Magnetfeld—hervorruft, der danach diese Quermagnetisierung während beispielsweise 0,6 msec stark verringert oder auf Null herabsetzt, so daß eine ausreichende Längsmagnetisierung infolge eines Fehlerstromes möglich ist. Wenn die Frequenz dieser Impulse ausreichend hoch ist, so ist der Schalter für Wechselstrom sowie für Gleichstromkomponenten oder für glatten Gleichstromfehlerstrom physikalisch annähernd gleich empfindlich.

Anscheinend kann ein über einen Menschen fließender Wechselstrom die Nerven wesentlich stärker strapazieren als ein Gleichstrom bei gleichem Effektivwert beider Ströme. Die physiologische Empfindlichkeit von Lebewesen entspricht daher nicht der physikalischen Empfindlichkeit. Es ist daher ratsam, die physikalische Empfindlichkeit auf Wechselstromfehlerstrom in an sich bekannter Weise zu erhöhen.

Man kann den erfindungsgemäßen Fehlerstromschutzschalter auch mit einem Schutzschalter, der nur oder vornehmlich auf Wechselstromfehlerströme empfindlich ist, in an sich bekannter Weise kombinieren. Dadurch kann man das Verhältnis der Empfindlichkeit für Wechselstrom zu der für Gleichstromfehlerströme völlig frei einstellen.

Man kann den Summenstromwandler des erfindungsgemäßen Fehlerstromschutzschalters auch so ausbilden, daß der die Quermagnetisierung bewirkende Draht den hohlen Ring, den Torus, der den Ringkern darstellt, nicht auf seiner ganzen Umfangslänge durchläuft. Man könnte beispielsweise ein zweites Loch in 20 mm Entfernung von der ersten Bohrung 902 ausbilden. Dann könnte man den Draht durch das erste Loch 902 in das Innere des Ringes einführen und auf dem kürzesten Weg durch das zweite Loch weider herausführen. Man kann den Draht auch mehrere Male durch das erste Loch in den Ring hinein und durch das zweite Loch—eventuell auch auf dem längeren Weg, das heißt in der anderen Umlaufrichtung—aus dem Ring herausführen. Dadurch wird das von einem Fehlerstrom induzierte Längsmagnetfeld unterbrochen und zum Abklingen gebracht.

Wenn eine Situation eintritt, die von der Auswertungsschaltung 905 als gefährlich bewertet wird, so leitet letztere über die Anschlüsse 910 und 910a ein Signal auf den Auslöser 920, wodurch der Auslöser zum Ansprechen gebracht wird und mittels des Schaltschlosses 920a eine Abschaltung bewirkt. Infolge des relativ feinen mechanischen Aufbaus eines Auslösers sind nur geringe Kräfte für die Ablösung des Auslöseankers erforderlich.

Die Auswertschaltung 905 verarbeitet die an ihren Eingängen auftretenden Signale von der Fehlerstromprüfschaltung 896. Das von einem Fehlerstrom, gleich welcher Art, herrührende Signal wird in der Schaltung im Falle eines elektronischen Aufbaus verstärkt, gleichgerichtet und kann durch einen Tiefpaß geglättet werden. Dieses Gleichspannungssignal kann auf den Eingang einer gesonderten Schmitt-Trigger-Schaltung mit Differenzverstärker (beispielsweise Halbleiter-Schaltungstechnik von Tietze/Schenk, Siete 299, Kap. 10.17.3) geleitet werden. Für dieses von einem Fehlerstrom herrührende Signal soll gelten, daß der Ausgang des betrefenden Schmitt-Triggers auf Logisch-EIN schaltet, wenn die Spannung den eingestellten Einschaltpegel überschreitet und daß sie auf Logisch-NULL schaltet, wenn die Spannung unter den Ausschaltpegel fällt. Am Ausgang 910 steht das Signal EINS an, wenn am Ausgang des Schmitt-Triggers EINS erscheint. Der Rückleiter ist mit 910a bezeichnet. Alsdann fleißt vom Ausgang 910 ein Strom, desen Richtung so wählbar und dessen Stromstärke so einstellbar ist, daß der Auslöser 920 in Funktion tritt und die Abschaltung einleitet.

Der Impulsgenerator 917 ist so ausgelegt, daß er Impulse abgeben kann, die das magnetische Material des Ringkerns 900 in Sättigung führen.

## Patentansprüche

1. Fehlerstromschutzschalter, der Wechselstromfehlerströme, Gleichstromanteile sowie glatte Gleichstromfehlerströme erfassen kann und der nach dem Prinzip des Summenstromwandlers arbeitet, durch dessen Ringkern (900) die betriebsstromführenden Leiter (900a, 900b, 900c, 900d) durchgeführt sind, dadurch gekennzeichnet, daß zumindest ein weiterer Leiter (903) im Inneren des Ringkerns (900) selbst mindestens längs eines Ringbereiches etwa in der Mittellinie (901) angeordnet ist und mit einem Impulsgenerator (917) für höhere Frequenzen als der Netzfrequenz verbunden ist, dessen Impulse so bemessen sind, daß der Kern in die magnetische Sättigung gelangt.

2. Fehlerstromschutzschalter nach Anspruch 1, dadurch gekennzeichnet, daß der Ringkern (900) aus Ferrit ausgebildet ist.

3. Fehlerstromschutzschalter nach Anspruch 1 oder 2, dadurch gekennzeichnet, daß der Ringkern (900) als hohler Torus mit zumindest einer Durchführungsöffnung (902) ausgebildet ist.

## Revendications

1. Disjoncteur de courant de défaut, qui peut détecter des courants alternatifs de défaut, des composantes de courant continu ainsi que des courants continus uniformes de défaut et qui fonctionne selon le principe du transformateur de courant de sommation et à travers le noyau toroïdal (900) duquel passent les conducteurs (900a, 900b, 900c, 900d) véhiculant le courant de service, caractérisé par le fait qu'au moins un conducteur supplémentaire (903) est disposé à l'intérieur du noyau toroïdal (900) même, au moins le long d'une zone annulaire située approximativement sur la ligne centrale (901) du noyau et est relié pour des fréquences supérieures à la fréquence du réseau, à un générateur d'impulsions (917) dont les impulsions sont dimensionnées de telle manière que le noyau parvient à l'état de saturation magnétique.

2. Disjoncteur de courant de défaut selon la revendication 1, caractérisé par le fait que le noyau annulaire (900) est réalisé par un ferrite.

3. Disjoncteur de courant de défaut selon la revendication 1 ou 2, caractérisé par le fait que le noyau toroïdal (900) est réalisé sous la forme d'un tore creux comportant au moins une ouverture de passage (902).

## Claims

1. Fault current circuit breaker which is capable of detecting a.c. fault currents, d.c. components and smooth d.c. fault currents, and which operates on the principle of a summation transformer through the annular core (900) of which pass conductors (900a, 900b, 900c, 900d) which carry the operating current, characterised in that at least one further conductor (903) is arranged inside the annular core (900) itself at least along an annular zone approximately on the central line (901), and is connected to a pulse generator (917) for frequencies which are higher than the mains frequency, the pulses of which are arranged to be such that the core attains magnetic saturation.

2. Fault current circuit breaker as claimed in Claim 1, characterised in that the annular core (900) consists of ferrite.

3. Fault current circuit breaker as claimed in Claim 1 or 2, characterised in that the annular core (900) consists of a hollow torus with at least one lead through opening (902).